# EUROPÄISCHE PATENTSCHRIFT

(11) **EP 0 307 677 B1**
(45) Veröffentlichungstag und Bekanntmachung des Hinweises auf die Patenterteilung: **03.11.1993**
(21) Anmeldenummer: 88113836.6
(22) Anmeldetag: 25.08.1988
(51) Int. Cl.: G01S 3/78, G01P 13/00

(54) **Verfahren zur Zielfeldaufklärung**
Method for target field clarification
Procédé pour l'amélioration de la résolution d'une zone cible

(30) Priorität: 31.08.1987 DE 3729059
(43) Veröffentlichungstag der Anmeldung: 22.03.1989
(73) Patentinhaber: Menke, Josef-Ferdinand, Dipl.-Ing., D-24960 Glücksburg (DE)
(72) Erfinder: Menke, Josef-Ferdinand, Dipl.-Ing., D-24960 Glücksburg (DE)
(74) Vertreter: Riecke, Manfred

(56) Entgegenhaltungen:
- EP-A- 0 209 929
- GB-A- 2 035 007
- GB-A- 2 071 957
- US-A- 4 266 847

## Beschreibung

Die Erfindung betrifft ein Verfahren zur Anzeige sich bewegender Objekte (Ziele), durch das zwei zeitlich versetzte Objektsignaturen auf einem Detektor rasterförmig abgebildet werden.

Bei Verfahren dieser Art werden die Objekte im optischen oder thermischen Wellenlängenbereich auf dem Detektor abgebildet, und es wird angestrebt, auch Objekte mit geringen Winkelausdehnungen ereits in großer Entfernung zu erfassen.

Nach dem gegenwärtigen Stand der Technik kann dies z.B. dadurch bewerkstelligt werden, daß mit einem Vielelementenarray eine parallele Horizontalabtastung rundum oder in einem großen Sektor in einem oder mehreren übereinanderliegenden Streifen erfolgt. Eine Vorrichtung nach diesem Stand der Technik, die mit zwei verschiedenen Vielelemente-Detektoren arbeitet, ist z.B. beschrieben in der GB-A-2 071 957, bei der ein vom Objekt reflektierter Laserstrahl zeitlich versetzt zwei verschiedenen Detektorreihen, jeweils bestehend aus mehreren nebeneinander angeordneten Einzeldetektoren, zugeführt wird. Dabei wird ein einzelner Bildpunkt bei einem ersten Scan der ersten Detektorreihe zugeführt, und - nach Höhenversatz durch einen Kippspiegel - bei einem zweiten Scan der zweiten Detektorreihe. Aus einem Vergleich der zwei zeitlich nacheinander erfolgten Abtastungen läßt sich dann das bewegte Objekt erkennen. Ein solcher Vergleich erfordert bei diesem Verfahren jedoch einen enormen Speicherbedarf. Außerdem liegt die Wiederholrate bei derartigen Verfahren im Sekundenbereich. In dieser Zeit kann sich jedoch ein Objekt (Ziel), welches sich mit so geringer Winkelgeschwindigkeit bewegt, daß es noch von Interesse ist,
um so viele Bildpunkte verschoben haben, daß eine eindeutige Zuordnung der Information der zwei Bilder schwierig ist.

Unter Winkelgeschwindigkeit ist hier die Geschwindigkeit der seitlichen Abweichung des bewegten Objektes (Zieles), z.B. einer anfliegenden Rakete, von der Visierlinie zwischen Beobachter und Rakete verstanden. Hieraus ergibt sich, daß ein Objekt, daß sich mit großer Winkelgeschwindigkeit bewegt nicht von Interesse ist, weil es an dem Beobachter vorbeifliegen wird, während das Interesse an dem Objekt umso größer ist, je kleiner diese Winkelgeschwindigkeit ist. Ist letztere gleich Null, so bewegt sich das Objekt auf einer Geraden direkt auf den Beobachter zu.

Der Erfindung liegt die Aufgabe zugrunde, ein Verfahren anzugeben, das erstens mit einer wesentlich geringeren Speicherkapazität auskommt und zweitens eine wesentlich höhere Wiederholrate der Abtastungen gestattet, so daß auch Objekte, die sich mit nur geringer Winkelgeschwindigkeit bewegen, eindeutig definierbar sind.

Die Aufgabe ist durch ein Verfahren gelöst, das die im Anspruch angegebenen Verfahrensschritte umfaßt.

Weil bei dem erfundenen Verfahren zur Feststellung einer Bewegung des Objektes nur noch die Koordinaten noch nicht unterdrückter Objekte gespeichert werden müssen, verringert sich der Speicherbedarf gegenüber dem Verfahren nach dem Stand der Technik (Rundumabtastung) ganz erheblich, z.B. um den Faktor 60. Gleichzeitig erhöht sich die mögliche Wiederholrate der Abtastungen aus dem Sekundenbereich in einen Bereich, in dem eine Abtastrate (Frequenz) von ca. 50 ms möglich ist.

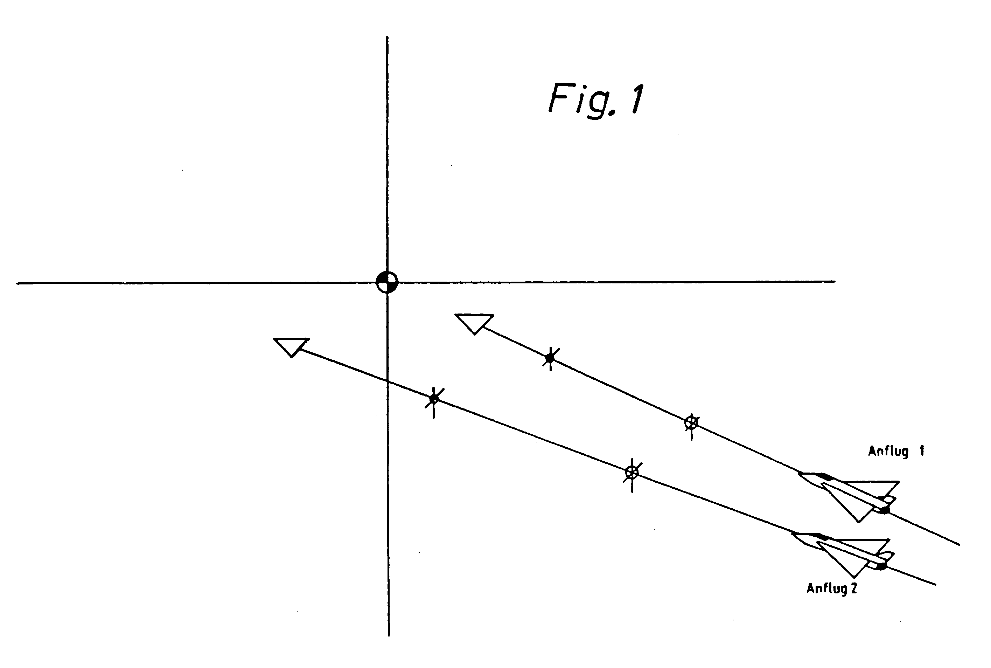

Figur 1 verdeutlicht die Aufgabenstellung.
Die Figur erklärt an Hand zweier Flugziele die Auswertung eines Zieles.
Anflug 1 ist ein Direktanflug. Bei Auswertung der Bildkoordinaten zweier zeitlich versetzter Objektsignaturen stellt der Rechner fest, daß die Koordinaten zwar die gleichen sind, daß sich aber die Signalamplituden des Flugkörpers verändert haben, nämlich erhöht haben, auf Grund des geringer gewordenen Abstandes.

Anflug 2 ist ein Vorbeiflug. Dadurch ergibt sich ein Versatz der Lage der Zielinformationen des 1. Scans zur Lage der Zielinformationen des 2. Scans. Durch Subtraktion beider Informationen erhält man ein Restsignal, welches als Zielsignal von einer Feuerleitanlage weiterverarbeitet wird.

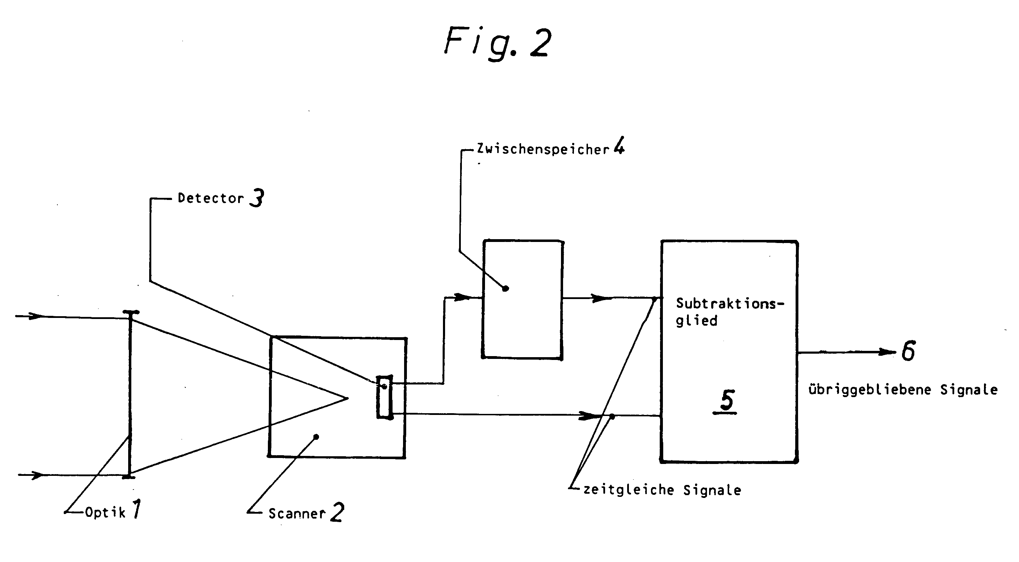

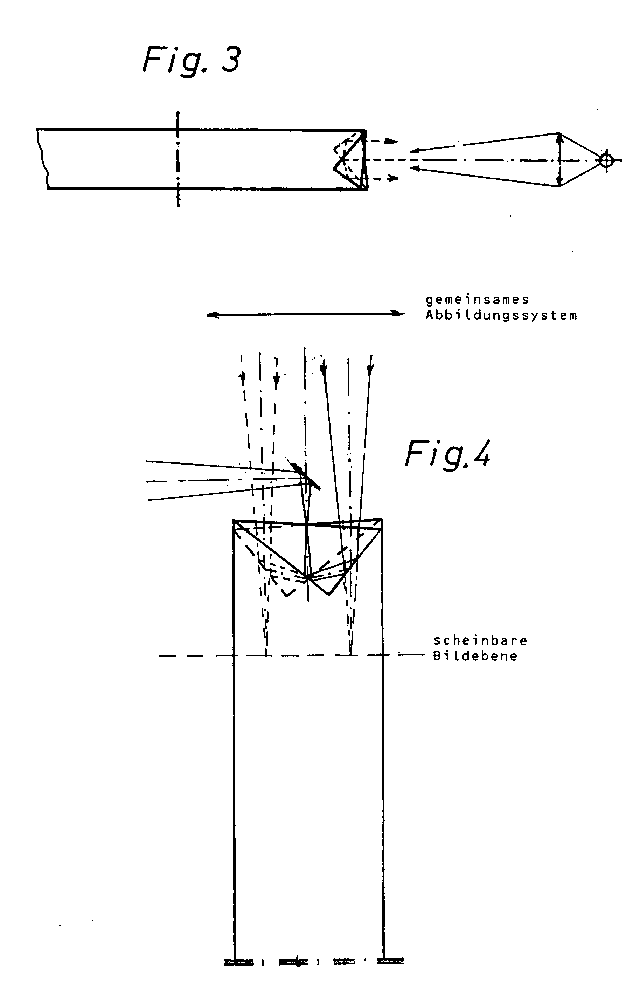

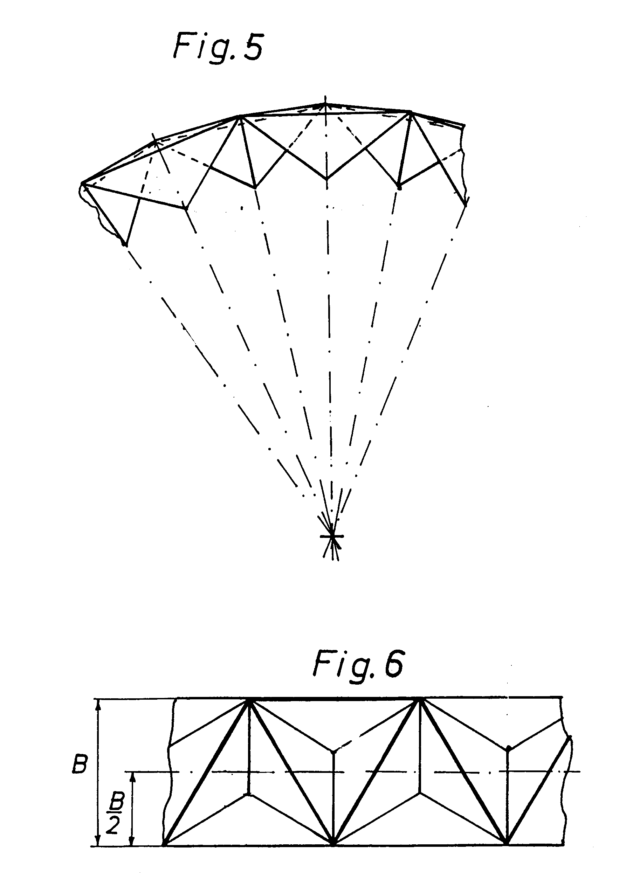

Fig.2 zeigt im Prinzip eine Vorrichtung zur Durchführung des erfundenen Verfahrens. Mit 1 ist ein Objektiv bezeichnet, mit dem die vom Ziel ausgehenden optischen bzw. thermischen Strahlen einem Scanner 2 zugeleitet werden, der das Objektfeld rasterförmig nach Höhe und Zeilen abtastet.
Als ein solcher Scanner kann z.B. ein Scanner verwendet werden, wie er im Prinzip in der US-PS 4 266 847 beschrieben ist. Jedoch wird zum Zeilenscan ein rotierendes Tripelspiegelrad der in den Figuren 3-6 dargestellten Art verwendet. Es handelt sich dabei um ein Prismenrad, dessen Außenumfang mit nebeneinander liegenden, umgekehrt zueinander angeordneten vertieften Tripelspiegeln besetzt ist. Diese Tripelspiegel reflektieren bei ihrer Rotation durch einen einfallenden Strahl 50% dieses Strahles nach der einen Seite und 50% dieses Strahles nach der anderen Seite (Fig.4), wobei die beiden reflektierten Strahlen zeitlich zueinander versetzt sind, nämlich um diejenige Zeit, welche 1 Tripelspiegel benötigt, um sich von seiner ersten Hälfte bis zu seiner zweiten Hälfte am Strahl vorbeizudrehen.

Der Tripelspiegel liefert somit zwei zeitlich geringfügig zueinander versetzte Strahlen des gleichen Bildpunktes, die über weitere, nicht gezeigte optische Bauglieder zu einem Vielelementen-Detektor 3 geleitet werden. Als solcher Detektor kann z.B. ein Sprite-Detektor mit 8 Elementen benutzt werden, wie er von der Firma Mullard in England geliefert wird.

Am Ausgang dieses Detektors 3 stehen somit die Signale zweier zeitlich zueinander versetzter Objektsignaturen an. Die Signale der ersten Objektsignatur werden einem rechnergesteuerten elektronischen Zwischenspeicher 4 zugeführt und dort solange gespeichert, bis auch die Signale der zeitlich versetzten zweiten Objektsignatur zur Verfügung stehen.

Sobald dies der Fall ist, werden die Signale beider Objektsignaturen gleichzeitig einem rechnergesteuerten elektronischen Subtraktionsglied 5 zugeführt, in dem die Signale beider Objektsignaturen voneinander subtrahiert werden.

Die danach übrigbleibenden, einander nicht deckungsgleichen Signale stammen von dem anvisierten Ziel, das sich in der Zeit zwischen der ersten Objektfeldabtastung und der zweiten Objektfeldabtastung (zeitlich versetzt um die Vorbeibewegungszeit der einen Tripelspiegelhälfte bis zur zweiten Tripelspiegelhälfte an einem Strahl) ja um eine gewisse Strecke bewegt hat.

Diese übrigbleibenden, vom Ziel stammenden Signale 6 werden dem Rechner einer Feuerleiteinrichtung zugeführt, der in bekannter Weise die Koordinaten des Zieles ermittelt und entsprechende Feuerbefehle ausgibt.

Der elektronische Zwischenspeicher und das Subtraktionsglied sind aus konventionellen Bauelementen, Rechnern etc, aufgebaut, die jedem Fachmann zur Verfügung stehen.

## Patentansprüche

1. Verfahren zur Anzeige sich bewegender Objekte (Ziele) durch das mittels einer einzigen Optik (1) zwei zeitlich auf ein Minimum reduziert versetzte Objektsignaturen im optischen und/oder thermischen Wellenlängenbereich auf einem Detektor (3) rasterförmig abgebildet werden,
und durch das die durch einen Zwischenspeicher (4) zeitlich verzögerten Signale der ersten Signatur zeitgleich zur zweiten Signatur zur Verfügung stehen und dann die Signale beider Signaturabtastungen voneinander subtrahiert werden und mit den im Speicher (4) übrigbleibenden, nicht gelöschten Einzelsignalen die Koordinaten der sich bewegenden Objekte definiert und elektronisch ausgegeben werden, gekennzeichnet durch die folgenden Verfahrensschritte:
a die durch die Optik (1) getretenen Strahlen werden durch ein nachgeordnetes Tripelspiegelrad in etwa 50%iger Teilung in zwei Strahlenbündel unterteilt, von denen das eine Bündel zur Aufzeichnung der ersten Objektsignatur und das zweite Bündel zur Aufzeichnung der zweiten Objektsignatur verwendet wird, wobei
b die Aufzeichnung beider Objektsignaturen auf einem einzigen Vielelemente-Detektor (3) erfolgt, dem abwechselnd die Strahlen des einen Strahlenbündels und diejenigen des zweiten Strahlenbündels zugeführt werden.

## Claims

1. Method for the indication of moving objects (targets) by which two object signatures, which are displaced in time reduced to a minimum, in the optical and/or thermal wavelength range are imaged in the manner of a raster on a detector (3) by means of a single optical system (3), and by which the signals, delayed in time by a temporary store (4), of the first signature are available at the same time as those of the second signature and then the signals of the two signature scannings are subtracted from one another and the coordinates of the moving objects are defined by the not erased individual signals remaining in the store (4) and are issued electronically, characterised by the following method steps:
a the rays passing through the optical system (1) are subdivided by a downstream triple reflector drum in approximately 50 percent division into two beams, of which one beam is used for the recording of the first object signature and the second beam for the recording of the second object signature, wherein
b the recording of both object signatures takes place on a single multi-element detector (3), to which the rays of the one beam and those of the second beam are fed in alternation.

## Revendications

1. Procédé pour la signalisation d'objets en mouvement (cibles) suivant lequel deux signaux caractéristiques situés dans le domaine des longueurs d'ondes optiques et/ou thermiques, obtenus au moyen d'une optique (1) unique avec un décalage dans le temps réduit au minimum sont représentés sous la forme de crans sur un détecteur (3) et suivant lequel les premiers signaux caractéristiques retardés par une mémoire intermédiaire (4) sont mis simultanément en présence de seconds signaux caractéristiques, les signaux en provenance des deux lecteurs des signaux caractéristiques reçus étant ensuite soustraits les uns des autres et les coordonnées des objets en mouvement étant définies et sorties sous forme électronique avec les signaux individuels non effacés restant dans la mémoire (4), caractérisé par les étapes suivantes :
a) les rayons ayant traversé l'optique (1) sont partagés environ à 50% en deux faisceaux de rayons par une roue tournante à trois miroirs disposés derrière celle-ci, l'un desdits faisceaux étant utilisé pour le tracé du premier signal caractéristique et le second de ces faisceaux étant utilisé pour le tracé du deuxième signal caractéristique,
b) les tracés des deux signaux caractéristiques de l'objet étant réalisés sur un seul détecteur multiple (3), dans lequel on entre à tour de rôle les rayons de l'un des faisceaux et ceux du second faisceau.
